# EUROPÄISCHE PATENTANMELDUNG

(11) **EP 3 402 049 A1**
(43) Veröffentlichungstag der Anmeldung: **14.11.2018**
(21) Anmeldenummer: 18169416.7
(22) Anmeldetag: 26.04.2018
(51) Int. Cl.: H02K 3/28

(54) **STATOR FÜR EINE ELEKTRISCHE MASCHINE**

(30) Priorität: 11.05.2017 DE 102017208012
(71) Anmelder: Robert Bosch GmbH, 70442 Stuttgart (DE)
(72) Erfinder: Schulz, Gunnar, 31139 Hildesheim (DE); Ermer, Martin, 31139 Hildesheim (DE); Brandt, Dirk, 31079 Sibbesse (DE); Oelkers, Benedikt, 31177 Harsum (DE)

(57) **Zusammenfassung**

Stator (100) für eine elektrische Maschine, aufweisend ein im Wesentlichen zylindrisches Joch (102), eine Vielzahl an Nuten (104), welche zueinander in Achsrichtung des Jochs (102) parallel verlaufend und radial zum Joch (102) geöffnet angeordnet sind, eine mindestens dreiphasige elektrische Steckwicklung, welche in den Nuten (104) angeordnet ist, dadurch gekennzeichnet, dass die Steckwicklung folgende Komponenten aufweist: einen Sternpunktkontaktstab (201), wobei der Sternpunktkontaktstab (201) in einer Nut (104) angeordnet ist, und mit einer ersten elektrischen Phase der Steckwicklung elektrisch verbunden ist, und einen Sternpunktdraht (202), wobei der Sternpunktdraht (202) in einem Sternpunktdraht-Scheitelbereich gebogen ist, und mit den Sternpunktdrahtschenkeln in jeweils einer anderen Nut (104) angeordnet ist, wobei ein Sternpunktdrahtschenkel mit einer zweiten elektrischen Phase (112) der Steckwicklung und das andere Sternpunktdrahtschenkel mit einer dritten elektrischen Phase (113) verbunden ist, und der Sternpunktdraht (202) im Sternpunktdraht-Scheitelbereich elektrisch leitfähig mit dem Sternpunktkontaktstab (201) zur Erzeugung des Sternpunktes (130) der Steckwicklung elektrisch verbunden ist.

## Beschreibung

Die vorliegende Erfindung betrifft einen Stator für eine elektrische Maschine.

### Stand der Technik

Die Schrift DE 10 2010 003 127 A1 offenbart eine elektrische Maschine mit einem geblechten Stator. Der Stator trägt eine als Steckwicklung ausgebildete, mehrsträngige Wicklung, deren Leiter außerhalb des Blechpaketes in einem Wickelkopf zur Mehrphasenwicklung verschaltet sind.

### Offenbarung der Erfindung

Die vorliegende Erfindung betrifft einen Stator für eine elektrische Maschine mit einer günstig herstellbaren und dauerbeständigen Ausgestaltung eines Sternpunktes einer elektrischen mehrphasigen Steckwicklung.

Der erfindungsgemäße Stator für eine elektrische Maschine weist ein im Wesentlichen zylindrisches Joch auf. An dem Joch sind in Achsrichtung des Jochs zueinander parallel verlaufend und radial zum Joch geöffnet eine Vielzahl an Nuten angeordnet. In den Nuten ist eine mindestens dreiphasige elektrische Steckwicklung angeordnet. Die Steckwicklung weist einen Sternpunktkontaktstab auf. Der Sternpunktkontaktstab ist in einer Nut angeordnet und mit einer ersten elektrischen Phase der Steckwicklung elektrisch verbunden. Die Steckwicklung weist ferner einen Sternpunktdraht auf, wobei der Sternpunktdraht zwischen zwei Sternpunktdrahtschenkeln in einem Sternpunktdraht-Scheitelbereich gebogen ist. Der Sternpunktdraht ist mit den Sternpunktdrahtschenkeln in jeweils einer anderen Nut angeordnet, wobei ein Sternpunktdrahtschenkel mit einer zweiten elektrischen Phase der Steckwicklung und der andere Sternpunktdrahtschenkel mit einer dritten elektrischen Phase verbunden sind. Im Sternpunktdraht-Scheitelbereich ist der Sternpunktdraht elektrisch leitfähig mit dem Sternpunktkontaktstab zur Erzeugung des Sternpunktes der Steckwicklung elektrisch verbunden, insbesondere verschweißt. Durch diese Anordnung des Sternpunktes werden vorteilhafterweise nur zwei statt wie bisher drei Komponenten der Steckwicklung miteinander zum Sternpunkt verbunden, wodurch Prozesszeit eingespart wird. Es entsteht des Weiteren der Vorteil, dass der Sternpunkt näher am Statorkern angeordnet werden kann, wodurch der Bauraum des Stators reduziert wird. Der Sternpunkt des erfindungsgemäßen Stators weißt außerdem eine höhere Dauerbeständigkeit, beispielsweise gegenüber mechanischen Vibrationen, als Statoren nach dem Stand der Technik auf, da beispielsweise nur eine Schweißstelle vorliegt und diese Schweißstelle dauerbeständiger erzeugt werden kann.

In einer Ausführung ist der Sternpunktdraht-Scheitelbereich stoffschlüssig und/oder kraftschlüssig mit dem Sternpunktkontaktstab elektrisch verbunden. Dadurch wird vorteilhafterweise eine sehr günstige Herstellung des Sternpunktes erreicht.

In einer bevorzugten Ausführung ist der Sternpunktdraht-Scheitelbereich mit dem Sternpunktkontaktstab durch Laserstrahlschweißen verbunden. Das Laserstrahlschweißen kann vorteilhafterweise schnell und günstig erfolgen.

In einer besonders bevorzugten Ausführung ist der Sternpunktkontaktstab gegenüber dem Sternpunktdraht in Radialrichtung des Jochs innenliegend angeordnet. Somit kann die Steckwicklung einfacher ausgeführt werden.

In einer Weiterführung überbrückt der Sternpunktdraht mit dem Sternpunktdraht-Scheitelbereich zwischen den Schenkeln des Sternpunktdrahts drei Nuten. Somit kann die Steckwicklung platzsparend angeordnet werden.

In einer weiteren Ausführung sind in den überbrückten Nuten mindestens zwei Phasenanschlussdrähte der elektrischen Phasen der Steckwicklung angeordnet. Dadurch kann die Steckwicklung sehr platzsparend angeordnet werden.

Vorzugsweise ist der Sternpunkt in Radialrichtung des Jochs im Bereich der Steckwicklung angeordnet. Dadurch kann der Rotor nach der Anordnung der Steckwicklung von beiden Seiten in den Stator eingeschoben werden.

Die Steckwicklung weist besonders bevorzugt eine Vielzahl an untereinander zur mindestens dreiphasigen elektrischen Steckwicklung verschalteter elektrisch leitfähiger Wicklungsdrähte auf. Dabei ist vorzugsweise jeder Wicklungsdraht in einem Scheitelbereich zwischen Wicklungsdrahtschenkeln gebogen und mit den Wicklungsdrahtschenkeln jeweils in einer anderen Nut angeordnet, wobei die über den Stator hinausragenden Wicklungsdrahtschenkel der Wicklungsdrähte untereinander zur mindestens dreiphasigen elektrischen Steckwicklung elektrisch verbunden sind.

Die vorliegende Erfindung wird nachfolgend anhand einer bevorzugten Ausführungsform mit beigefügter Zeichnung erläutert.
- Figur 1:: Schema des Stator mit einer dreiphasigen Steckwicklung
- Figur 2:: Abbildung des Stators mit erfindungsgemäßem Sternpunkt

### Ausführungsbeispiele

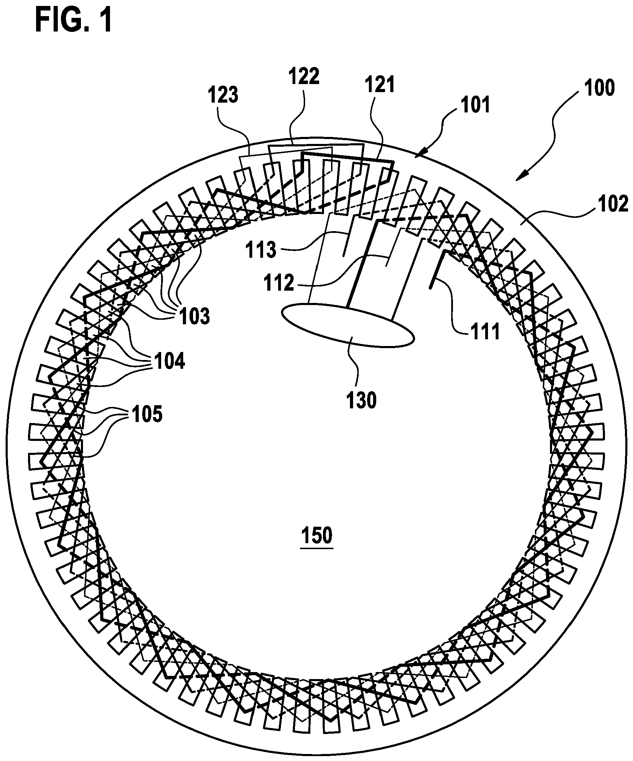

In Figur 1 ist ein Stator 100 für eine elektrische Maschine schematisch dargestellt. Der Stator 100 weist einen zylindrischen Statorkern 101 mit einem zylindrischen Joch 102 auf. Das Joch 102 weist einen Hohlraum 150 auf. In Radialrichtung des Statorkerns 101 bzw. des Jochs 102 und am Joch 102 innenliegend, d.h. zum Hohlraum 150 hin, sind zueinander parallel und in Axialrichtung des Jochs 102 verlaufend Statorzähne 103 und Nuten 104 angeordnet. In den Nuten 104 ist eine dreiphasige elektrische Steckwicklung angeordnet. Die Steckwicklung weist Wicklungsdrähte 105 auf. Die Wicklungsdrähte 105 sind in diesem Ausführungsbeispiel auf der Oberseite des Stators 100, welche in Figur 1 als Draufsicht dargestellt ist, gebogen. Der gebogene Bereich wird als Scheitelbereich bezeichnet. Die Wicklungsdrähte 105 sind des Weiteren mit Ihren zwei Wicklungsdrahtschenkeln jeweils in einer anderen Nut 104 angeordnet. Auf der Rückseite des Stators 100 sind die Wicklungsdrahtschenkel an den Enden jeweils zur dreiphasigen elektrischen Steckwicklung elektrisch verschaltet. Die elektrischen Verbindungen der Wicklungsdrähte 105 auf der Rückseite sind in Figur 1 gestrichelt dargestellt, wobei die Wicklungsdrahtschenkel unterschiedlicher Wicklungsdrähte zur dreiphasigen Steckwicklung elektrisch verbunden sind. Die dreiphasige elektrische Steckwicklung weist die Phasen 111, 112 und 113 auf. Die erste elektrische Phase 111 wird von einem Phasenanschlussdraht der ersten elektrischen Phase 111 durch die Anordnung der gebogenen Wicklungsdrähte 105 und die elektrischen Verbindungen auf der Rückseite zunächst in Umfangsrichtung des Statorkerns 101 im Uhrzeigersinn geführt und anschließend durch eine Umkehrdraht 121 in Umfangsrichtung entgegen dem Uhrzeigersinn geführt, wodurch elektrische Wicklungen bzw. Spulen der ersten elektrischen Phase 111 um die Statorzähne 103 resultieren. Entsprechend werden die zweite elektrische Phase 112 und die dritte elektrische Phase 113 um jeweils eine Nut 104 bzw. einen Statorzahn 103 versetzt zueinander verschaltet bzw. geführt. Die drei elektrischen Phasen 111, 112 und 113 der Steckwicklung werden des Weiteren in einem Sternpunkt 130 elektrisch miteinander zu einer Sternpunktschaltung verbunden. Der Sternpunkt 130 schließt damit die drei Phasen 111, 112 und 113 kurz. Der Sternpunkt 130 kann optional geerdet sein. Der Sternpunkt 130 ist in Figur 1 im Bereich der Phasenzuleitungen der elektrischen Phasen 111, 112 und 113 angeordnet.

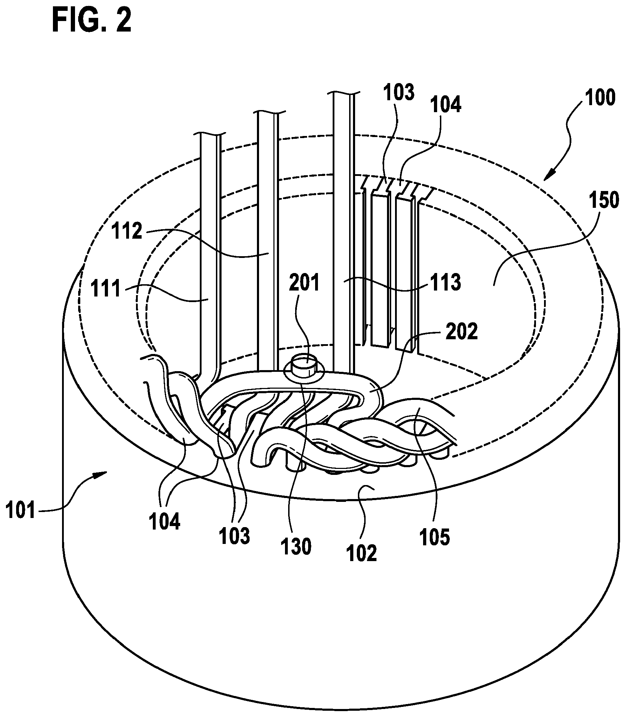

In Figur 2 ist ein Stator 100 aus einer Perspektive von schräg oben mit einer erfindungsgemäßen Steckwicklung dargestellt. Der Stator 100 weist einen zylindrischen Statorkern 101 mit einem zylindrischen Joch 102 auf. Am Joch 102 sind in Radialrichtung des Jochs 102 nach Innen und zum Hohlraum 150 hin eine Vielzahl an Statorzähnen 103 angeordnet. Zwischen zwei Statorzähnen 103 weist der Statorkern 101 jeweils eine Nut 104 auf. Die Nuten 104 und die Statorzähne 103 verlaufen in Axialrichtung des Jochs 102 bzw. des Statorkerns 101 parallel zueinander. In den Nuten 104 sind Wicklungsdrähte 105 angeordnet. Die Wicklungsdrähte 105 sind in einem mittleren Bereich zwischen zwei Schenkeln bzw. im Scheitelbereich der Wicklungsdrähte 105 jeweils gebogen und mit ihren jeweiligen Wicklungsdrahtschenkeln in jeweils einer anderen Nut 104 angeordnet. Um die Wicklungsdrähte 105 möglichst platz- und materialsparend, d.h. nah am Statorkern 101, anzuordnen, sind die Wicklungsdrähte 105 dreidimensional gebogen. Die drei Phasenanschlussdrähte der dreiphasigen elektrischen Steckwicklung sind jeweils in einer anderen Nut 104 angeordnet. Die drei elektrischen Phasen 111, 112 und 113 verlaufen zueinander um eine Nut 104 versetzt. Die drei elektrischen Phasen 111, 112 und 113 der Steckwicklung werden in einem Sternpunkt 130 im Bereich der Phasenanschlussdrähte elektrisch miteinander verbunden. Erfindungsgemäß ist am Sternpunkt 130 ein Sternpunktdraht 202 in einem Sternpunktdraht-Scheitelbereich mit einem Sternpunktkontaktstab 201 verschweißt und dadurch elektrisch verbunden. Der Sternpunkt 130 liegt im Bereich der Phasenanschlussdrähte der Steckwicklung und in Radialrichtung des Jochs 101 im Bereich der Steckwicklung, d.h. der Sternpunkt 130 liegt in Radialrichtung des Jochs 101 nicht im Bereich des Hohlraums 150. Der Sternpunktkontaktstab 201 kontaktiert die erste elektrische Phase 111 der elektrischen Wicklung 111. Der Sternpunktdraht 202 ist im Sternpunktdraht-Scheitelbereich gebogen und mit den Sternpunktdrahtschenkeln in jeweils einer anderen Nut 104 angeordnet, wobei ein Sternpunktdrahtschenkel mit der zweiten elektrischen Phase 112 der Steckwicklung und der andere Sternpunktdrahtschenkel mit der dritten elektrischen Phase 113 elektrisch verbunden ist. Die drei elektrischen Phasen 111, 112 und 113 werden am Sternpunkt 130 kurzgeschlossen, wodurch eine Sternpunktschaltung ausgebildet ist. Der gebogene Sternpunktdraht 202 überbrückt in diesem Ausführungsbeispiel drei Nuten 104, wobei in den überbrückten drei Nuten 104 der Phasenanschlussdraht der zweiten elektrischen Phase 112, der Phasenanschlussdraht der dritten elektrischen Phase 113 und der Sternpunktkontaktstab 201, welcher mit der ersten elektrische Phase 111 verbunden ist, in jeweils einer anderen überbrückten Nut 104 angeordnet sind.

Es kann vorgesehen sein, dass der Sternpunktdraht 202 im Sternpunktdraht-Scheitelbereich stoffschlüssig und/oder kraftschlüssig mit dem Sternpunktkontaktstab 201 elektrisch verbunden ist. Bevorzugt wird der Sternpunktdraht 202 mit dem Sternpunktkontaktdraht 201 durch Laserstrahlschweißen verschweißt.

Alternativ kann der Stator 100 dazu eingerichtet sein, einen Rotor in radialer Richtung des Jochs 102 außen liegend aufzunehmen, d.h. einen sogenannten Außenläufer als Rotor aufzunehmen. In dieser Ausführung sind die Nuten 104 außen liegend angeordnet. Die oben beschriebene Ausführung des Sternpunktes 130 der mindestens dreiphasigen Steckwicklung mit dem gebogenen Sternpunktdraht 202, welcher im Sternpunktdraht-Scheitelbereich mit dem Sternpunktkontaktstab 201 elektrisch verbunden ist, ändert sich dadurch nicht.

## Patentansprüche

1. Stator (100) für eine elektrische Maschine, aufweisend mindestens folgende Komponenten
• ein im Wesentlichen zylindrisches Joch (102),
• eine Vielzahl an Nuten (104), welche zueinander in Achsrichtung des Jochs (102) parallel verlaufend und radial zum Joch (102) angeordnet sind,
• eine mindestens dreiphasige elektrische Steckwicklung, welche in den Nuten (104) angeordnet ist, und
• einen Sternpunktkontaktstab (201), wobei der Sternpunktkontaktstab (201)
i. in einer Nut (104) angeordnet ist, und
ii. mit einer ersten elektrischen Phase (111) der Steckwicklung elektrisch verbunden ist,
**dadurch gekennzeichnet, dass** die Steckwicklung folgende Komponente aufweist
• einen Sternpunktdraht (202), wobei der Sternpunktdraht (202)
i. in einem Sternpunktdraht-Scheitelbereich zwischen zwei Schenkeln des Sternpunktdrahts gebogen ist,
ii. mit den Schenkeln in jeweils einer anderen Nut (104) angeordnet ist, wobei ein Schenkel des gebogenen Sternpunktdrahtes mit einer zweiten elektrischen Phase (112) der Steckwicklung und der andere Schenkel des gebogenen Sternpunktdrahtes mit einer dritten elektrischen Phase (113) verbunden ist, und
iii. im Sternpunktdraht-Scheitelbereich elektrisch leitfähig mit dem Sternpunktkontaktstab (201) zur Erzeugung des Sternpunktes (130) der Steckwicklung elektrisch verbunden ist.

2. Stator (100) nach Anspruch 1, **dadurch gekennzeichnet, dass** der Sternpunktdraht-Scheitelbereich stoffschlüssig und/oder kraftschlüssig mit dem Sternpunktkontaktstab (201) elektrisch verbunden ist.

3. Stator (100) nach einem der vorhergehenden Ansprüche, **dadurch gekennzeichnet, dass** der Sternpunktdraht-Scheitelbereich mit dem Sternpunktkontaktstab (201) durch Laserstrahlschweißen verbunden ist.

4. Stator (100) nach einem der vorhergehenden Ansprüche, **dadurch gekennzeichnet, dass** der Sternpunktkontaktstab (201) gegenüber dem Sternpunktdraht (202) in Radialrichtung des Jochs (102) innenliegend angeordnet ist.

5. Stator (100) nach einem der vorhergehenden Ansprüche, **dadurch gekennzeichnet, dass** der Sternpunktdraht (202) mit dem Sternpunktdraht-Scheitelbereich drei Nuten (104) überbrückt.

6. Stator (100) nach Anspruch 5, **dadurch gekennzeichnet, dass** in den überbrückten Nuten (104) mindestens zwei Phasenanschlussdrähte (111, 112, 113) angeordnet sind.

7. Stator (100) nach einem der vorhergehenden Ansprüche, **dadurch gekennzeichnet, dass** der Sternpunkt (130) in Radialrichtung des Jochs (101) im Bereich der Steckwicklung angeordnet ist.

8. Stator (100) nach einem der vorhergehenden Ansprüche, **dadurch gekennzeichnet, dass** die Steckwicklung eine Vielzahl an untereinander verschalteter elektrisch leitfähiger Wicklungsdrähte (105) aufweist.

9. Stator (100) nach Anspruch 4, **dadurch gekennzeichnet, dass** die Wicklungsdrähte (105)
i. in einem Scheitelbereich zwischen zwei Wicklungsdrahtschenkeln gebogen sind, und
ii. mit den Wicklungsdrahtschenkeln jeweils in einer anderen Nut (104) angeordnet sind, wobei die über den Stator (100) hinausragenden Wicklungsdrahtschenkel der Wicklungsdrähte (105) untereinander zur Steckwicklung elektrisch verbunden sind.
